# EUROPEAN PATENT APPLICATION

(11) **EP 4 592 059 A1**
(43) Date of publication of application: **30.07.2025**
(21) Application number: 22959593.9
(22) Date of filing: 22.09.2022
(51) Int. Cl.: B29C 64/209

(54) **CONTROL DEVICE, PRINTING DEVICE, AND METHOD FOR CONTROLLING PRINTING DEVICE**

(71) Applicant: Fuji Corporation, Chiryu-shi, Aichi 472-8686 (JP)
(72) Inventor: WATANABE, Kenji, Chiryu-shi, Aichi 472-8686 (JP)
(74) Representative: Grünecker Patent- und Rechtsanwälte PartG mbB
(86) International application number: PCT/JP2022/035520
(87) International publication number: WO 2024/062629

(57) **Abstract**

A control device of the present disclosure is used in a printing device that includes an ejection head including multiple nozzles configured to eject a liquid material to a target object and that is configured to execute printing processing using the ejection head by dividing a printing region, the control device including a control section configured to detect a nozzle pitch, and set a printing start position of the divided printing region in response to the detected nozzle pitch.

## Description

### Technical Field

The present description discloses a control device, a printing device, a method for controlling a printing device.

### Background Art

Conventionally, as a printing device, a three-dimensional shaping device has been proposed in which a curing liquid, which is a liquid material, is ejected from multiple nozzles of an ejection head to form a three-dimensional object (see, for example, Patent Literature 1). This device includes a detection device that detects a position of the curing liquid ejected onto a reception surface, executes inspection ejection at least before and after a three-dimensional shaped object is shaped, and causes the detection device to detect the position of the curing liquid on the reception surface. In this device, it is possible to determine whether there is an ejection abnormality for each nozzle based on the position of the curing liquid on the reception surface.

### Citation List

### Patent Literature

Patent Literature 1:JP-A-2019-025664

### Summary of the Invention

### Technical Problem

In the printing device, for example, when the liquid material is ejected, a nozzle pitch may change for each printing processing due to an influence of a temperature of the ejection head or the like. In addition, in the printing device, there are limitations such as a length of a nozzle array of the ejection head, and the printing processing may be executed by dividing a printing region in which the printing is executed, into multiple regions. In such a case, when the nozzle pitch is changed, a normal printing result may not be obtained.

The present disclosure has been made to solve such a problem, and an object of the present disclosure is to provide a control device, a printing device, and a method for controlling a printing device, with which a printing result can be obtained more reliably.

The present disclosure employs the following means in order to achieve the object described above.

A control device disclosed in the present description is
a control device for use in a printing device that includes an ejection head including multiple nozzles configured to eject a liquid material to a target object and that is configured to execute printing processing using the ejection head by dividing a printing region, the control device including:
a control section configured to detect a nozzle pitch, and set a printing start position of the divided printing region in response to the detected nozzle pitch.

In this control device, since the printing start position of the divided printing region is more appropriate, the printing result can be obtained more reliably.

### Brief Description of Drawings

Fig. 1 is a schematic view illustrating examples of production system 10 and three-dimensional printer 11.
Fig. 2 is a view illustrating an example of a schematic configuration of pallet 50.
Fig. 3 is a flowchart illustrating an example of a printing processing routine.
Fig. 4 is a flowchart illustrating an example of an ejection inspection processing routine.
Fig. 5 is a view illustrating an example of ejection inspection processing.
Fig. 6 is a view illustrating an example of setting a printing start position of divided second region 54.

### Description of Embodiments

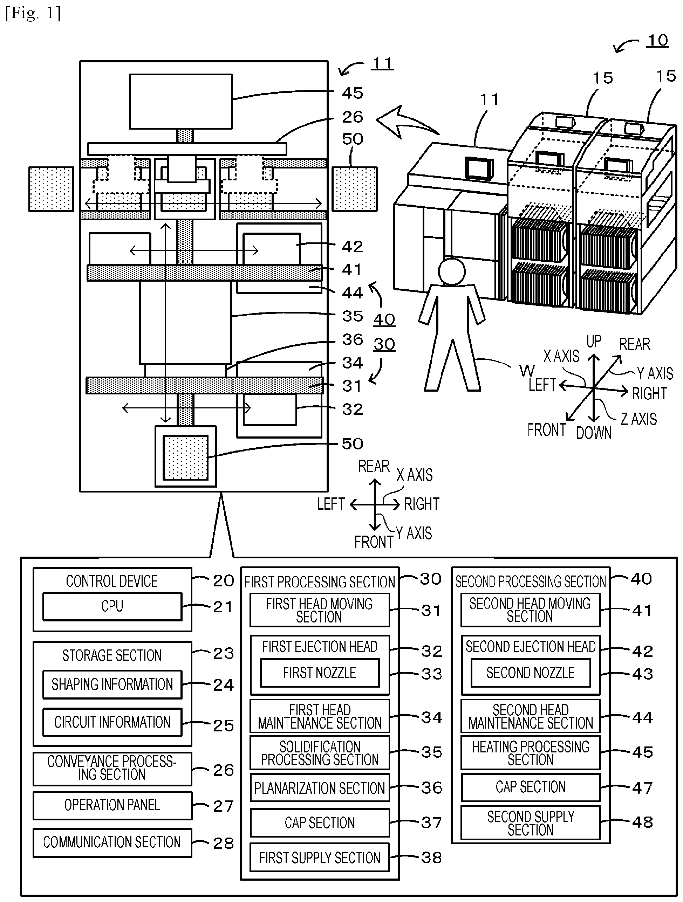

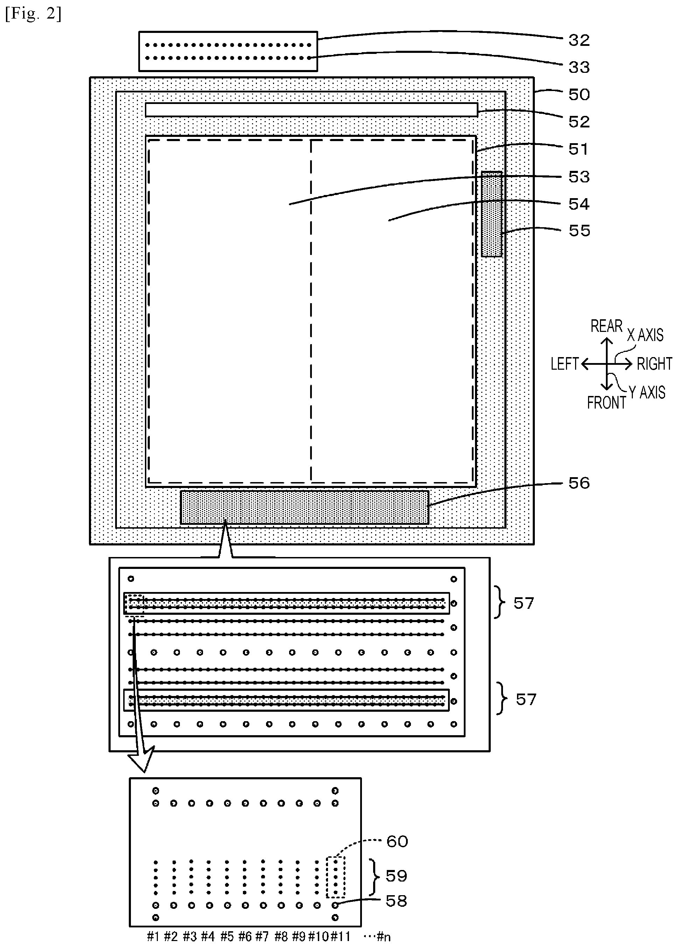

The present embodiment will be described with reference to the drawings. Fig. 1 is a schematic view illustrating an example of production system 10 including three-dimensional printer 11 as an example of the present disclosure. Fig. 2 is a view illustrating an example of a schematic configuration of pallet 50. In the present embodiment, a left-right direction (X axis), a front-rear direction (Y axis), and an up-down direction (Z axis) are as illustrated in Figs. 1 and 2.

Production system 10 is configured as a production line in which three-dimensional printer 11 shapes a three-dimensional object as first processing and forms a predetermined member on the three-dimensional object as second processing, and then mounting device 15 executes processing of mounting a component. Three-dimensional printer 11 may form a circuit pattern as the second processing, and mounting device 15 may execute processing of mounting the component at a predetermined position of the circuit pattern. Production system 10 may include only three-dimensional printer 11 without including mounting device 15, or may include, in addition to mounting device 15, one or more mounting-related devices among a printing device that prints solder as viscous fluid on the three-dimensional object, a printing inspection device that inspects a printing result, a mounting inspection device that inspects a mounting result, a conveyance device that conveys the shaped three-dimensional object, a reflow device that executes reflow processing, and the like. In production system 10 shown in Fig. 1, two mounting devices 15 are provided, but three or more mounting devices 15 may be provided, or one mounting device 15 may be provided. Mounting device 15 is a device that mounts the component on the three-dimensional object shaped by three-dimensional printer 11.

Three-dimensional printer 11 is a three-dimensional shaping device for shaping the three-dimensional object. A material to be shaped is not particularly limited, and examples thereof include resins and ceramics. Three-dimensional printer 11 includes control device 20, storage section 23, conveyance processing section 26, operation panel 27, communication section 28, first processing section 30, and second processing section 40. Here, a configuration will be mainly described in which three-dimensional printer 11 shapes a board as a base material of the three-dimensional object by using first processing section 30, and executes processing of forming the circuit pattern on the shaped board by using second processing section 40.

Control device 20 is configured as a microprocessor centered on CPU 21, and controls entire three-dimensional printer 11. Control device 20 exchanges information with storage section 23, conveyance processing section 26, operation panel 27, communication section 28, first processing section 30, and second processing section 40. Storage section 23 is a large-capacity storage medium, and includes, for example, HDD or a flash memory. Storage section 23 stores shaping information 24 or circuit information 25. Shaping information 24 includes information such as a shape or a size of the three-dimensional object to be manufactured. Circuit information 25 includes information such as the circuit pattern formed in a three-dimensional object shape. Three-dimensional printer 11 executes shaping work based on the information stored in storage section 23.

Conveyance processing section 26 executes processing of moving and fixing pallet 50 on which a product is placed. As illustrated in Fig. 1, conveyance processing section 26 grips pallet 50 to move pallet 50 in an X axis direction and to move pallet 50 in a Y axis direction along a guide. Conveyance processing section 26 scans pallet 50 in the Y axis direction also when the members are formed by first processing section 30 and second processing section 40.

Operation panel 27 is a unit that receives an input from worker W and presents information to worker W. Operation panel 27 is disposed on a front surface of printing device 11, and includes a display section as a display and an operation section having a touch panel and buttons. Communication section 28 is an interface used when communicating with an external device such as mounting device 15 or a management device (not illustrated). Each device of production system 10 exchanges information via communication section 28.

First processing section 30 is a shaping unit that shapes the three-dimensional object by ejecting a liquid material to be solidified and then solidifying the liquid material. First processing section 30 includes first head moving section 31, first ejection head 32, first head maintenance section 34, solidification processing section 35, planarization section 36, cap section 37, and first supply section 38. First head moving section 31 includes a slider that moves by being guided by guide rails in the X axis direction, and a motor that drives the slider. First ejection head 32 is mounted on the slider, and first ejection head 32 moves in the X axis direction along with the movement of the slider. First ejection head 32 is a shaping head that ejects the liquid material to shape the three-dimensional object. First nozzle 33 that ejects the liquid material is formed on a lower surface of first ejection head 32. Examples of the liquid material ejected by first nozzle 33 include a liquid curable resin (such as an ultraviolet curable resin, a thermosetting resin, or a two-component mixed curable resin), a thermoplastic resin, and a slurry obtained by mixing a solid material such as an inorganic material with a solvent.

First ejection head 32 is a shaping head that ejects the liquid material to be solidified, to pallet 50 as a target object. First ejection head 32 is connected to first supply section 38 and receives the supply of the liquid material from first supply section 38. First ejection head 32 includes first nozzle 33 and an ejection drive section. First nozzle 33 is an opening hole for ejecting the liquid material supplied from first supply section 38 to pallet 50. First nozzle 33 is formed in a nozzle plate disposed on a lower surface side of first ejection head 32 at a predetermined interval. The nozzle plate expands and contracts due to heat. The ejection drive section ejects, for example, the liquid material to a side of pallet 50, and examples thereof include a piezoelectric element. The ejection drive section is disposed in each first nozzle 33, and is driven based on a signal of control device 20. First supply section 38 includes a supply tank that accommodates the liquid material, a waste liquid tank, and a flow path that is connected to these tanks and through which the liquid material flows via first ejection head 32.

First head maintenance section 34 is a unit that inspects an ejection state of first ejection head 32 and executes ejection maintenance. First head maintenance section 34 executes, for example, the maintenance of the ejection state of the liquid material from first nozzle 33, cleaning of first nozzle 33, or the like. First head maintenance section 34 includes a discharge plate that receives the liquid material ejected from first ejection head 32, a wiping section that has a wiping sheet or the like as a cleaning member and wipes and cleans the vicinity of first nozzle 33, an imaging section that images the liquid material formed on pallet 50, and the like. Control device 20 executes inspection processing or cleaning processing on a regular basis or as appropriate in response to a degree of contamination of first ejection head 32 by using first head maintenance section 34.

Solidification processing section 35 is a unit that executes predetermined processing on the liquid material ejected onto pallet 50 and solidifies the liquid material. When first ejection head 32 ejects a liquid ultraviolet curable resin, solidification processing section 35 is a unit that emits ultraviolet rays. When first ejection head 32 ejects the liquid material that is solidified by drying and firing, solidification processing section 35 may be a unit that executes drying and firing. Each time one layer of the three-dimensional object is formed on pallet 50 by first ejection head 32, pallet 50 is moved to solidification processing section 35, and the three-dimensional object is accommodated and solidified. Planarization section 36 is a unit that flattens the liquid material ejected onto pallet 50. For example, planarization section 36 may scan a flattening blade in the Y axis direction to flatten an outer shape of an ejection object. Cap section 37 is a unit that seals first nozzle 33 when first nozzle 33 is not used for a long period of time or when there is a predetermined blank time during the shaping.

Second processing section 40 is an ejection unit that forms a predetermined material on a surface of the three-dimensional object solidified by first processing section 30. Second processing section 40 includes second head moving section 41, second ejection head 42, second head maintenance section 44, heating processing section 45, cap section 47, and second supply section 48. Second head moving section 41 has the same mechanism as the slider, the motor, and the like of first head moving section 31, and the detailed description thereof will be omitted. Second ejection head 42 is a forming head that ejects the liquid material to the three-dimensional object as the target object to form the circuit pattern or the like. Second nozzle 43 that ejects the liquid material is formed on a lower surface of second ejection head 42. Examples of the liquid material ejected from second nozzle 43 include a mixed liquid obtained by mixing a solid material in a solvent, and a solution obtained by dissolving a resin in a solvent. Examples of the liquid material for forming the circuit pattern include a mixed liquid in which metal powder as a conductive material is dispersed in an organic solvent. Second ejection head 42 includes an ejection unit or second supply section 48 having a configuration similar to that of first ejection head 32, and the detailed description thereof will be omitted.

Second head maintenance section 44 has the same mechanism as the discharge plate and the wiping section of first head maintenance section 34, and the detailed description thereof will be omitted. Heating processing section 45 is a unit that executes processing of drying the solvent contained in the liquid material formed on the surface of the three-dimensional object. After all the circuit patterns are formed by second ejection head 42, pallet 50 may be accommodated and dried in heating processing section 45, or pallet 50 may be accommodated and dried each time a part of the circuit patterns is formed by second ejection head 42. Cap section 47 has the same configuration as cap section 37 of first processing section 30, and the detailed description thereof will be omitted. The configurations of first ejection head 32 and second ejection head 42 are not limited to those described above, and may be changed as appropriate in response to intended use or desired specification. In the present embodiment, for convenience of description, first ejection head 32 and second ejection head 42 are simply referred to as ejection heads, first nozzle 33 and second nozzle 43 are simply referred to as nozzles, and first processing section 30 and second processing section 40 are simply referred to as processing sections.

Pallet 50 is a plate-shaped member having a region for shaping the three-dimensional object. As shown in Fig. 2, pallet 50 includes free shaping region 51, waste ejection region 52, sensor measurement region 55, and reception member region 56. A removable transparent film is attached to an upper surface of pallet 50, and a next three-dimensional object can be manufactured by replacing this film. Free shaping region 51 is a printing region in which the three-dimensional object is shaped by first processing section 30, and is a printing region in which a predetermined pattern is formed on the three-dimensional object by second processing section 40. In three-dimensional printer 11, pallet 50 includes free shaping region 51 having a width that is longer than a length of a nozzle array of first ejection head 32, and shaping processing is executed by first ejection head 32 in multiple regions obtained by dividing the region. The shaping processing is executed by dividing free shaping region 51 into first region 53 using a left end portion of free shaping region 51 as a reference position and second region 54 located on a right side position of first region 53. The regions of first region 53 and second region 54 are changed in response to the expansion and contraction of the nozzle plate of first ejection head 32 or the presence of an ejection failure nozzle. Waste ejection region 52 is a region that receives unnecessary liquid material ejected from first ejection head 32 or second ejection head 42. Sensor measurement region 55 is a region in which sensors of first processing section 30 or second processing section 40 are inspected. Reception member region 56 is a region in which the ejection inspection of first ejection head 32 or second ejection head 42 is executed. Ejection inspection region 57 of first ejection head 32 and ejection inspection region 57 of second ejection head 42 are formed in reception member region 56. Fiducial mark 58 is formed in each ejection inspection region 57 in accordance with a disposition position of each nozzle. Control device 20 can receive ejection liquid material 59 ejected from the nozzles in the arrangement of fiducial marks 58 in ejection inspection region 57, and detect the ejection to a normal position in response to whether the liquid material is ejected to allowable range 60 from a positional relationship with fiducial marks 58. Further, control device 20 can detect whether the liquid material is ejected in a normal amount based on a relationship in size between ejection liquid material 59 and fiducial mark 58.

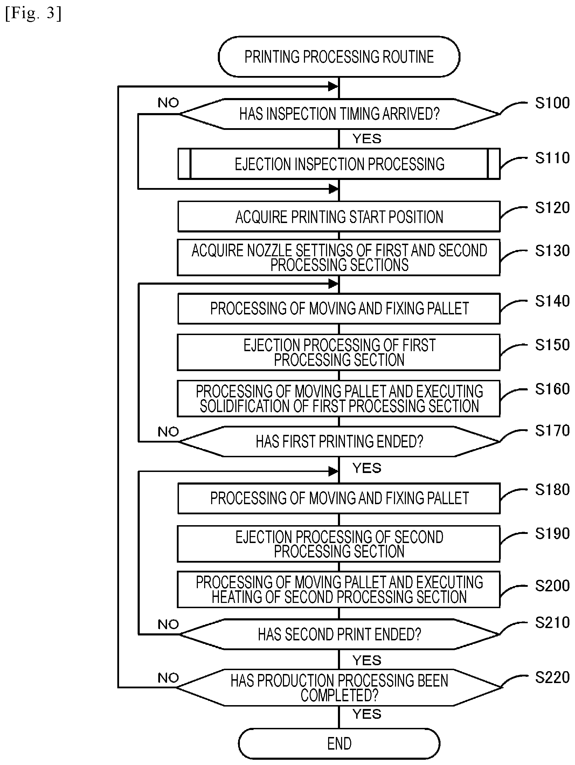

First, three-dimensional shaping processing of three-dimensional printer 11 configured as described above will be described. Fig. 3 is a flowchart illustrating an example of a printing processing routine executed by CPU 21 of control device 20. This routine is stored in storage section 23 and is executed by control device 20 after an execution command of production processing is input from worker W. When the printing processing routine is started, CPU 21 of control device 20 first determines whether an inspection timing of first processing section 30 and second processing section 40 has arrived (S100). The inspection timing may be, for example, a new production start time, when the production of a predetermined number (for example, 5 or 10) of three-dimensional objects has been completed, or when a predetermined time (for example, 4 hours or 8 hours) has elapsed. Here, as an example, it is assumed that the new production start time is set as the inspection timing. When the inspection timing has not arrived, CPU 21 ends this routine. On the other hand, when the inspection timing has arrived, CPU 21 executes ejection inspection processing of first ejection head 32 and/or second ejection head 42 (S110).

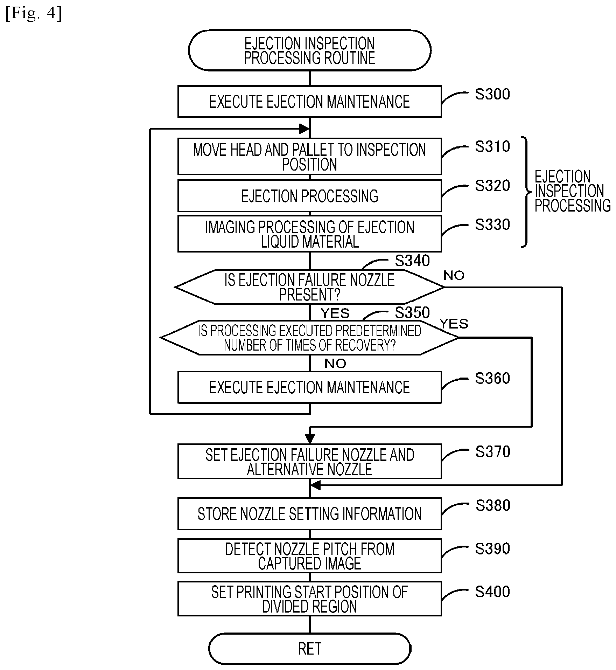

Fig. 4 is a flowchart illustrating an example of an ejection inspection processing routine executed by CPU 21 of control device 20. This routine is stored in storage section 23 and is executed in S110 after three-dimensional printer 11 is started. For convenience of description, the ejection inspection processing of first processing section 30 is mainly described, and the description of the ejection inspection processing of second processing section 40 will be omitted, but the same applies to second processing section 40. When this routine is executed, CPU 21 first executes ejection maintenance processing (S300). The ejection maintenance processing includes, for example, purge processing, wiping processing, flushing processing, and flow processing. The purge processing is, for example, processing of forcibly supplying the liquid material from the supply tank of first supply section 38 and ejecting the liquid material from first nozzle 33. The wiping processing is, for example, processing of wiping, via the wiping section, the nozzle plate on which first nozzle 33 is formed and removing the adhered liquid material. The flushing processing is processing of forcibly driving the ejection drive section of first ejection head 32 and forcibly ejecting the liquid material from first nozzle 33. The flow processing is processing of causing the liquid material to flow from the supply tank to the waste liquid tank via first ejection head 32. The ejection maintenance processing includes the above-described types of processing, and any processing is selected in response to an ejection abnormality of first nozzle 33. In S300, CPU 21 executes, for example, the purge processing.

Next, CPU 21 executes the ejection inspection processing (S310 to S320). In the ejection inspection processing, for example, the liquid material is ejected from first ejection head 32 to reception member region 56 of pallet 50, and the captured image by first head maintenance section 34 is subjected to image analysis to detect the ejection state of the liquid material from first nozzle 33. CPU 21 moves first ejection head 32 and pallet 50 to first head maintenance section 34 that is an inspection position (S310), executes the ejection processing of the liquid material multiple times in ejection inspection region 57 of pallet 50 (S320), and executes imaging processing of ejection liquid material 59 (S330). Examples of an ejection failure state include a non-ejection, an ejection position deviation, an ejection amount (insufficient droplet diameter), a satellite (excessive droplet diameter), and a landing (flying) shape failure. Next, CPU 21 determines whether the ejection failure nozzle is present based on an analysis result of the captured image (S340). CPU 21 determines that the ejection state is within a predetermined abnormal range as an ejection failure nozzle. The abnormal range can be empirically determined based on a range in which a shape of the product does not satisfy an allowable range. The "ejection failure nozzle" may include one or more of a nozzle in which the ejection position of the liquid material exceeds a predetermined allowable range, a nozzle in which the ejection amount of the liquid material is less than a predetermined allowable amount, a nozzle in which the liquid material is not ejected, and the like.

When the ejection failure nozzle is present in S340, CPU 21 determines whether the ejection maintenance and the ejection inspection have been executed a predetermined number of times of recovery (S350). The number of times of recovery may be empirically determined, for example, to the number of times that the ejection failure can be recovered, and is preferably multiple times or more, more preferably two to five times. Here, it is assumed that the number of times of recovery is set to three times, but the number of times of recovery is not limited to this as long as the number of times of recovery is two times or more. When the ejection maintenance processing and the ejection inspection processing have not been executed the predetermined number of times of recovery in S350, CPU 21 executes the ejection maintenance (S360) and executes the processing in and after S310. CPU 21 may execute maintenance processing in which the maintenance strength is increased in response to an increase in the number of times of recovery. CPU 21 may change, for example, the ejection maintenance in which the purge processing, the wiping processing, and the flushing processing are executed in order in S360. The processing order or the processing type is not particularly limited, and the same processing may be repeated, the processing order may be changed as appropriate, one or more types of processing may be omitted, or another processing may be added. When the ejection failure nozzle is present even when the processing is executed the predetermined number of times of recovery in S350, CPU 21 sets the corresponding nozzle to the ejection failure nozzle, and sets the nozzles other than the ejection failure nozzle to alternative nozzles for the ejection failure nozzle (S370). For example, CPU 21 may set a nozzle adjacent to the ejection failure nozzle as the alternative nozzle. After S370 or when the ejection failure nozzle is not present in S340, CPU 21 store, in storage section 23, information relating to a position of the nozzle that can execute the ejection, the ejection failure nozzle, or the alternative nozzle in a state of being included in nozzle setting information (S380).

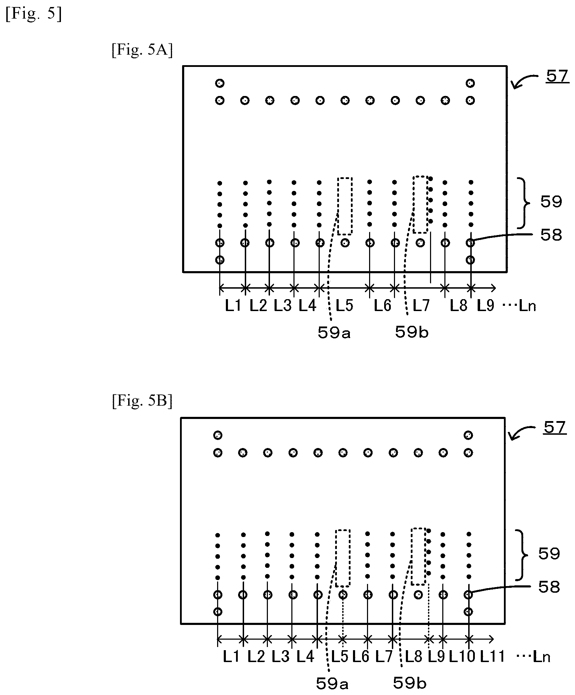

Subsequently, CPU 21 detects the nozzle pitch (coating resolution), which is an interval between first nozzles 33, by using a landing position of ejection liquid material 59 included in the captured image of ejection inspection region 57 (S390). Fig. 5 is a view of an example of ejection liquid material 59 on ejection inspection region 57 obtained by the ejection inspection processing. As shown in Fig. 5A, CPU 21 detects intervals L1 to L9 to Ln between the nozzles in the nozzle array including one to n nozzles based on the captured image of ejection inspection region 57, and integrates intervals L1 to L9 to Ln to obtain total length L of the nozzle array. In ejection inspection region 57, for example, there is ejection failure region 59a in which ejection liquid material 59 is not ejected or ejection failure region 59b that is displaced to the outside of allowable range 60. As shown in Fig. 5A, CPU 21 may detect nozzle pitches L1 to Ln without using ejection failure regions 59a and 59b, and integrate detected nozzle pitches L1 to Ln to obtain total length L of the nozzle array. In this case, the nozzle pitch can be detected without using an irregular ejection position. For example, CPU 21 obtains an average value of adjacent nozzle pitches L1, L2, L3, L4, L7, L10, and the like except for irregular nozzle pitches L5 and L6 or L8 and L9, and multiplies the average value by pitch number (n - 1) based on total number n of nozzles to obtain total length L of the nozzle array. In the method for calculating total length L, total length L can be obtained more appropriately even in the case where the ejection failure is present in the nozzles at the outermost portion (nozzles # 1 and # n). In addition, in the method for calculating total length L, even when the ejection position of the nozzle at the outermost portion is outside or inside the reference position, total length L is obtained from the average of the nozzle pitches, so that total length L can be obtained more appropriately. In the printing processing, the ejection failure nozzle is not used, and the liquid material is ejected from the alternative nozzle to the corresponding position. Alternatively, as illustrated in Fig. 5B, CPU 21 may obtain the nozzle pitch in ejection failure region 59a by using fiducial mark 58 as a virtual point, detect the nozzle pitch in ejection failure region 59b by using the ejection position while the positional deviation is maintained, and obtain total length L of the nozzle array.

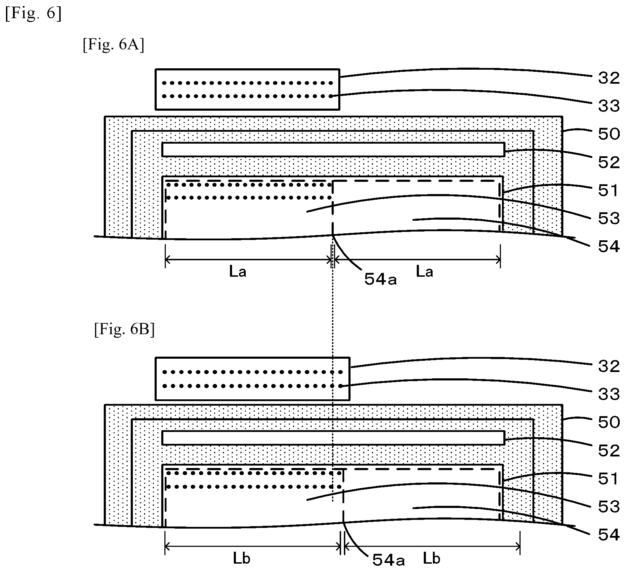

Then, CPU 21 sets the printing start position of divided free shaping region 51 in response to the detected nozzle pitch (S400), and ends this routine. For example, CPU 21 sets first region 53 for executing the printing processing to the same length as length L of the nozzle array obtained from the nozzle pitch. CPU 21 sets an end portion on the opposite side of the printing start position in first region 53 as the printing start position of divided second region 54. Fig. 6 is a view illustrating an example of setting the printing start position of divided second region 54, in which Fig. 6A is a view illustrating the printing start position when the nozzle array has length La, and Fig. 6B is a view illustrating the printing start position when the nozzle array has length Lb longer than length La. The nozzle plate on which first nozzle 33 of first ejection head 32 is formed expands and contracts due to heat. First ejection head 32 may be heated to improve the fluidity of the liquid material. Therefore, in first ejection head 32, when the temperature is changed, the length of the nozzle array may be changed, and first region 53 and second region 54 may overlap with each other or may be separated from each other due to the generation of a gap, so that the overlap or separation may occur during the formation of the three-dimensional object, resulting in a shaping failure in which a desired shape is not obtained. Similarly, in second ejection head 42, when the temperature is changed, the length of the nozzle array may be changed, and first region 53 and second region 54 may overlap with each other or a gap may be generated therebetween, so that the overlap or separation may occur during the formation of the predetermined pattern, resulting in a formation failure in which a desired pattern is not obtained. Since, in three-dimensional printer 11, length L of the nozzle array of first ejection head 32 or second ejection head 42 is detected to set the printing start position of the divided printing region, it is possible to further suppress the occurrence of such problems during such formation and pattern formation.

After the ejection inspection processing is executed in S110 of the printing processing routine or when the inspection timing has not arrived in S100, CPU 21 acquires a printing pressure start position set in S110 (S120), and reads and acquires the nozzle setting information of first processing section 30 and second processing section 40 from storage section 23 (S130). The nozzle setting information includes the information relating to the position of the nozzle that can execute the ejection, the ejection failure nozzle, or the alternative nozzle. Next, CPU 21 executes processing of conveying and fixing pallet 50 to a work position of first processing section 30 by conveyance processing section 26 (S140). Next, CPU 21 controls first ejection head 32 and conveyance processing section 26 so that the resin as the liquid material is ejected on pallet 50 based on shaping information 24 and the nozzle setting such that a predetermined shape included in shaping information 24 is obtained (S150). In this case, CPU 21 causes first nozzle 33 of first processing section 30 to execute processing of ejecting the liquid material from the other nozzles without using the ejection failure nozzle. CPU 21 also executes processing of ejecting the liquid material from the nozzle that can eject, moving pallet 50 as necessary, and ejecting the liquid material from the alternative nozzle. Next, CPU 21 moves pallet 50 to solidification processing section 35 and solidifies the resin (S160). Next, CPU 21 determines whether the printing processing in first processing section 30 has ended (S170), and, when the printing processing has not ended, executes the processing in and after S140. In this case, when the printing in first region 53 has ended, the printing processing in second region 54 is executed from the set printing start position. In this way, three-dimensional printer 11 repeats the ejection processing and the solidification processing to shape the three-dimensional object on pallet 50 in first region 53 and second region 54.

On the other hand, when the printing processing of first processing section 30 has ended in S170, CPU 21 conveys and fixes pallet 50 on which the shaped three-dimensional object is placed to second processing section 40 (S180). Next, CPU 21 causes second ejection head 42 and conveyance processing section 26 to eject the liquid material of a circuit raw material onto the shaped three-dimensional object based on the circuit pattern and the nozzle setting of circuit information 25 (S190). In this case, CPU 21 execute processing of ejecting the liquid material from nozzles other than the ejection failure nozzle among second nozzles 43 of second processing section 40 without using the ejection failure nozzle. CPU 21 also executes processing of ejecting the liquid material from the nozzle that can eject, moving pallet 50 as necessary, and ejecting the liquid material from the alternative nozzle. Subsequently, CPU 21 moves pallet 50 to heating processing section 45, and solidifies the liquid material (S200). Then, CPU 21 determines whether the printing processing in second processing section 40 has ended (S210), and, when the printing processing has not ended, executes the processing in and after S180. In this manner, CPU 21 repeats the ejection processing and the heating processing as necessary to form the circuit pattern on the three-dimensional object. In this case, when the printing in first region 53 has ended, the printing processing in second region 54 is executed from the set printing start position.

Meanwhile, when the printing processing of second processing section 40 has ended in S210, CPU 21 determines whether the production processing of the three-dimensional object as a manufacturing target has been completed (S220), and, when the production processing has not been completed, executes the processing in and after S100. On the other hand, when the production processing has been completed in S220 , CPU 21 ends this routine. In this way, in three-dimensional printer 11, the shaping processing and the pattern forming processing are executed using the printing start position corresponding to the nozzle pitch of first ejection head 32 or second ejection head 42, and the three-dimensional object having the predetermined circuit pattern formed on the surface thereof is manufactured.

Here, a correspondence relationship between the elements of the present embodiment and the elements of the present disclosure will be clarified. First ejection head 32 and second ejection head 42 of the present embodiment are examples of an ejection head, first nozzle 33 and second nozzle 43 are examples of a nozzle, free shaping region 51, first region 53, and second region 54 are examples of a printing region, control device 20 is an example of a control device, and CPU 21 is an example of a control section. In the present embodiment, by describing the operation of control device 20, examples of the printing device and of the method for controlling the printing device of the present disclosure is also clarified.

Control device 20 of the present embodiment described above is used in a printing device that includes an ejection head including multiple nozzles configured to eject a liquid material to a target object and that is configured to execute printing processing using the ejection head by dividing free shaping region 51 as a printing region. Control device 20 includes CPU 21 as a control section that detects the nozzle pitch and sets the printing start position of divided free shaping region 51 in response to the detected nozzle pitch. In control device 20, since the printing start position of the divided printing region is more appropriate, the printing result can be obtained more reliably.

Further, CPU 21 executes the inspection processing of inspecting the ejection state of the nozzles before the printing processing and/or during the printing processing, and detects the nozzle pitch via the inspection processing. In control device 20, since the inspection processing also serves as the detection of the nozzle pitch, the printing processing can be executed more efficiently. When the ejection failure nozzle is present in the inspection processing, CPU 21 detects the nozzle pitch without using the ejection position of the ejection failure nozzle, and executes the printing processing without using the ejection failure nozzle. In control device 20, since the influence of the ejection position of the ejection failure nozzle is excluded, it is possible to obtain a more appropriate nozzle pitch.

Further, CPU 21 causes the nozzle of the ejection head to eject the liquid material to reception member region 56 as the reception member that receives the liquid material, and detects the nozzle pitch using the captured image obtained by imaging the liquid material ejected to reception member region 56. In control device 20, since the position of the actual ejected liquid material is used, a more appropriate nozzle pitch can be detected. Further, CPU 21 detects the nozzle pitch that is changed in accordance with the temperature of the ejection head. In control device 20, it is possible to detect the nozzle pitch of the ejection head that expands and contracts in accordance with the temperature. The ejection head executes any one or more of the ejection of the liquid material for forming the three-dimensional object or the ejection of the liquid material for forming the predetermined pattern on the three-dimensional object. In control device 20, the printing result can be more reliably obtained with respect to the ejection head for the three-dimensional shaping device in which the liquid material may be heated.

It goes without saying that the control device, the printing device, and the method for controlling the printing device of the present disclosure are not limited to the above-described embodiment, and may be achieved in various aspects within a technical scope of the present disclosure.

For example, in the above-described embodiment, in the ejection inspection processing of inspecting the ejection state of the nozzle, the nozzle pitch is obtained, and the printing start position of divided free shaping region 51 is set, but the present disclosure is not limited to this, and the nozzle pitch may be detected in processing other than the inspection processing. In control device 20, the processing of detecting the nozzle pitch is required in addition to the inspection processing, but the printing result can be obtained more reliably. Further, in control device 20 described above, the liquid material is ejected from the nozzle of the ejection head to the reception member, and the nozzle pitch is detected using the captured image obtained by imaging the liquid material, but the present disclosure is not limited to this as long as the nozzle pitch is detected, and the nozzle plate may be directly measured.

In the above-described embodiment, free shaping region 51 is divided into two regions, first region 53 and second region 54, and the printing start position of second region 54 is set based on the nozzle pitch, but the present disclosure is not limited to this. For example, the printing device may divide free shaping region 51 into three or more regions, and set the printing start positions of the second region and a third region based on the nozzle pitch. Even in this printing device, since the printing start position of the divided printing region is more appropriate, the printing result can be obtained more reliably. In the above-described embodiment, free shaping region 51 includes first region 53 using the left end portion of free shaping region 51 as the reference position and second region 54 on the right end side of first region 53, but the present disclosure is not limited to this, and free shaping region 51 may include first region 53 using a right end portion of free shaping region 51 as the reference position and second region 54 on a left end side of first region 53.

In the above-described embodiment, the ejection head is the ejection head that ejects the liquid material for forming the three-dimensional object or the ejection head that ejects the liquid material for forming the predetermined pattern on the three-dimensional object, but may be any one thereof, or may be an ejection head for image formation, not for the three-dimensional shaping device.

In the above-described embodiment, three-dimensional printer 11 including control section 20 is described, but the present disclosure is not limited to this, and a configuration including only control section 20 may be used. Control device 20 described above is used in three-dimensional printer 11 that manufactures the three-dimensional object, but is not particularly limited to this as long as the product is manufactured by ejecting the liquid material, and may be used in a printing device other than the three-dimensional printer, for example, an inkjet printer that prints an image. In the above-described embodiment, control section 20 or three-dimensional printer 11 is used, but the method for controlling the printing device or the program thereof may be used.

The present disclosure may have the following configuration. For example, a method of the present disclosure for controlling a printing device is
a method for controlling a printing device that includes an ejection head including multiple nozzles configured to eject a liquid material to a target object and that is configured to execute printing processing using the ejection head by dividing a printing region, the method being executed by a computer with respect to the printing device, the method including:
a step (a) of detecting a nozzle pitch; and
a step (b) of setting a printing start position of the divided printing region in response to the detected nozzle pitch.

In the method for controlling the printing device, the printing result can be obtained more reliably as in the above-described control device. In the method for controlling the printing device, various aspects of the above-described printing device may be adopted, and a step for achieving each function of the above-described printing device may be added.

The present description also discloses a technical idea in which the "control device according to Claim 1 or 2" in Claim 4 as originally filed is changed to "the control device according to any one of Claims 1 to 3", a technical idea in which the "control device according to Claim 1 or 2" in Claim 5 as originally filed is changed to the "control device according to any one of Claims 1 to 4", a technical idea in which the "control device according to Claim 1 or 2" in Claim 6 as originally filed is changed to the "control device according to any one of Claims 1 to 5", or a technical idea in which the "control device according to Claim 1 or 2" in Claim 7 as originally filed is changed to the "control device according to any one of Claims 1 to 6".

### Industrial Applicability

The present disclosure can be used in the technical field of a device that manufactures a product by ejecting a liquid material.

### Reference Signs List

10: production system, 11: three-dimensional printer, 15: mounting device, 20: control device, 21: CPU, 23: storage section, 24: shaping information, 25: circuit information, 26: conveyance processing section, 27: operation panel, 28: communication section, 30: first processing section, 31: first head moving section, 32: first ejection head, 33: first nozzle, 34: first head maintenance section, 35: solidification processing section, 36: planarization section, 37: cap section, 38: first supply section, 40: second processing section, 41: second head moving section, 42: second ejection head, 43: second nozzle, 44: second head maintenance section, 45: heating processing section, 47: cap section, 48: second supply section, 50: pallet, 51: free shaping region, 52: waste ejection region, 53: first region, 54: second region, 55: sensor measurement region, 56: reception member region, 57: ejection inspection region, 58: fiducial mark, 59: ejection liquid material, 59a, 59b: ejection failure region, 60: allowable range, L, La, Lb: length, L1 to Ln: nozzle pitch, W: worker.

## Claims

1. A control device for use in a printing device that includes an ejection head including multiple nozzles configured to eject a liquid material to a target object and that is configured to execute printing processing using the ejection head by dividing a printing region, the control device comprising:
a control section configured to detect a nozzle pitch, and set a printing start position of the divided printing region in response to the detected nozzle pitch.

2. The control device according to Claim 1, wherein
the control section is configured to execute inspection processing of inspecting an ejection state of the nozzles before the printing processing and/or during the printing processing, and detect the nozzle pitch via the inspection processing.

3. The control device according to Claim 2, wherein
the control section is configured to, when an ejection failure nozzle is present in the inspection processing, detect the nozzle pitch without using an ejection position of the ejection failure nozzle, and execute the printing processing without using the ejection failure nozzle.

4. The control device according to Claim 1 or 2, wherein
the control section is configured to cause the nozzles of the ejection head to eject the liquid material to a reception member configured to receive the liquid material, and detect the nozzle pitch using a captured image obtained by imaging the liquid material ejected to the reception member.

5. The control device according to Claim 1 or 2, wherein
the control section is configured to detect the nozzle pitch that is changed in accordance with a temperature of the ejection head.

6. The control device according to Claim 1 or 2, wherein
the ejection head is an ejection head for a three-dimensional shaping device, the three-dimensional shaping device being configured to execute any one or more of ejection of a liquid material for forming a three-dimensional object or ejection of a liquid material for forming a predetermined pattern on the three-dimensional object.

7. A printing device comprising:
an ejection head including multiple nozzles configured to eject a liquid material to a target object; and
the control device according to Claim 1 or 2, the control device being configured to execute the printing processing using the ejection head by dividing the printing region.

8. A method for controlling a printing device that includes an ejection head including multiple nozzles configured to eject a liquid material to a target object and that is configured to execute printing processing using the ejection head by dividing a printing region, the method being executed by a computer, the method comprising:
a step (a) of detecting a nozzle pitch; and
a step (b) of setting a printing start position of the divided printing region in response to the detected nozzle pitch.
